# EUROPEAN PATENT SPECIFICATION

(11) **EP 3 058 426 B1**
(45) Date of publication and mention of the grant of the patent: **28.07.2021**
(21) Application number: 14771875.3
(22) Date of filing: 22.09.2014
(51) Int. Cl.: G05B 19/418, G06F 8/34

(54) **A METHOD FOR DESIGNING A PROCESSING PLANT**
VERFAHREN FÜR DEN ENTWURF EINER VERARBEITUNGSANLAGE
PROCÉDÉ DE CONCEPTION D'UNE USINE DE TRAITEMENT

(30) Priority: 18.10.2013 SE 1351241
(43) Date of publication of application: 24.08.2016
(73) Proprietor: Tetra Laval Holdings & Finance SA, 1009 Pully (CH)
(72) Inventor: ABRAHAMSSON, Mattias, S-261 94 Annelöv (SE); BRAKS, Johan, S-245 33 Staffanstorp (SE)
(74) Representative: Tetra Pak - Patent Attorneys SE
(86) International application number: PCT/EP2014/070112
(87) International publication number: WO 2015/055384

(56) References cited:
- US-A1- 2007 005 266
- US-A1- 2009 217 200
- US-A1- 2010 168 874
- US-A1- 2011 230 980

## Description

### Technical Field

The present invention relates to a method for a processing plant. More particularly, the present invention relates to a method for designing a processing plant, such as a liquid-processing plant.

### Background

In many industries dealing with various liquids it is necessary to treat the liquid prior to delivering the liquid as a final product. Such treatment is usually provided by means of a liquid processing plant, which plant is a sequence of a plurality of liquid product processing equipment performing various functions of the liquid processing plant.

In the liquid food industry a processing plant is usually designed for a number of different liquid food products. For example, a dairy processing plant may be configured to treat various milk products such as milk, yoghurt, sour cream, etc. Further, a beverage processing plant may be configured to treat various types of beverages such as still drinks, juices, low acid beverages, etc. Hence the processing plant is configured for the treatment and processing of a number of different liquid products resulting in a vast amount of controllable processing components and different production routes for each liquid product. Some of these components and production routes may be shared by different liquid products leading to a very complex controlling scheme for a processing plant.

When designing such processing plant each controllable component must be programmed individually for ensuring proper operation. This is a very time consuming procedure requiring a large amount of manual configurations, even when using available design tools in which each component is defined by its functionality. Techniques for graphically representing a processing plant are disclosed US2011/0230980A1 and US2007/0005266A1.

Although existing design tools may facilitate the design procedure and reduce the time for designing a complex processing plant it may be difficult to implement changes in an already existing processing plant. Since a specific component is usually associated with more functionality than is actually needed designing the processing plant will not only require excessive work, but it will also be very difficult to diagnose the processing plant. If a processing plant needs to be adjusted in order to process a new kind of product requiring new additives or different heat treatment, new valves, pumps, and heating equipment may be required. A designer must in such cases return to the original design and make necessary changes in line with the new plant specification. If a new component is associated with functions impacting on already existing components or functions it is necessary to also make changes to such components or functions. This results in a very time-consuming redesign process. Further, a thorough knowledge of the existing processing plant is required in order to avoid errors and mistakes in the redesign process.

### Summary

It is, therefore, an object of the present invention to overcome or alleviate the above described problems. The basic idea is to provide a module-based approach for designing a processing plant, and more specifically to provide a method for designing a processing plant according to claim 1.

### Brief Description of Drawings

The above, as well as additional objects, features, and advantages of the present invention, will be better understood through the following illustrative and nonlimiting detailed description of preferred embodiments of the present invention, with reference to the appended drawings, wherein:
Fig. 1a and 1b are schematic views of a liquid processing plant;
Fig. 2 is a schematic view of a representation of a liquid processing platform;
Fig. 3 is a schematic view of a design element database and corresponding design element entities;
Fig. 4 is a schematic view of a method according to an embodiment; and
Fig. 5 is a schematic view of a method according to a further embodiment.

### Detailed Description

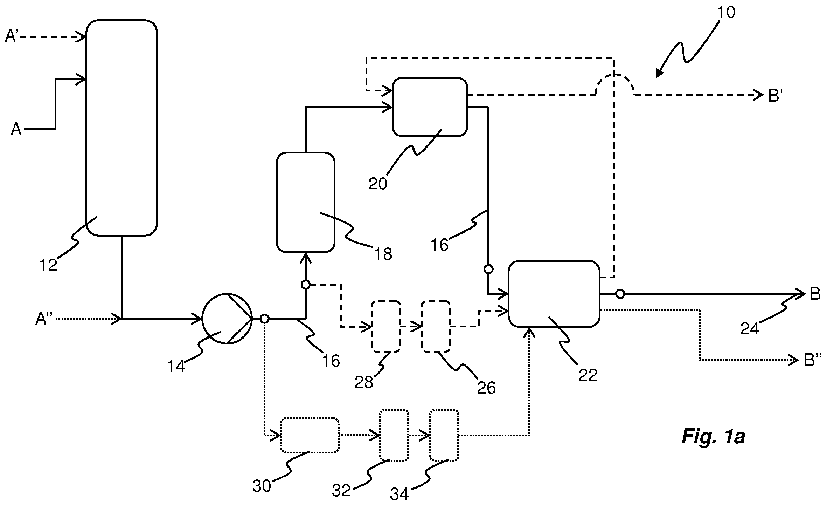

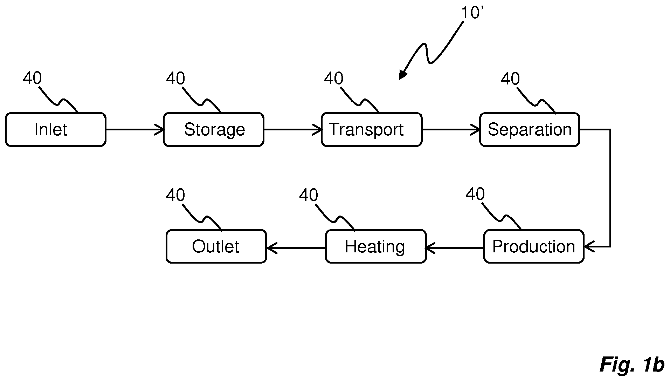

Starting with Fig. 1 a liquid processing plant 10 is shown. The liquid-processing plant 10 is configured to process a plurality of different liquids according to different processing schemes. Hence, the liquid-processing plant 10 may be installed in a production facility in order to provide numerous different liquid products depending on the choice of raw materials, specific process parameters and control. This may be achieved by controlling the liquid-processing plant in accordance with different liquid-processing production routes as will be further described in the following.

As is shown in Fig. 1a, a first production route is formed between liquid product inlet A and liquid product outlet B. A raw material enters a batch tank 12 and is transported through processing equipment 18, 20, and 22 before exiting at the outlet B. Transportation is enabled by means of a pump 14 which feeds the raw material through the processing equipment 18, 20, 22 via liquid piping 16. In case of milk production, the processing equipment 18 may e.g. represent a separator, the processing equipment 20 may represent a homogenizer, and the processing equipment 22 may represent a heat treatment unit.

The liquid-processing plant 10 also forms a second production route between liquid-product inlet A' and liquid-product outlet B'. The second production route may e.g. be configured to produce cultured food, such as drinking yoghurt. Pre-treated milk enters the batch tank 12, and is fed to an incubator 26 after an addition of culture 28. The cultured milk is thereafter bypassed from the separator 18 and the homogenizer 20 and enters the heat treatment unit 22 for cooling the cultured milk. Thereafter the cooled yoghurt enters the homogenizer 20 before the yoghurt exits the liquid processing path at B'.

A yet further production route may be provided for the production of still drinks. At inlet A", a fruit concentrate enters the liquid-processing plant 10 and is fed through equipment 30, 32, 34. At 30, syrup is added to the concentrate and equipment 32 represents a liquid food mixer for blending the concentrate with the syrup. Equipment 34 represents a water adding component, after which the still drink is fed to the heat treatment device 22 for pasteurization. The still drink exits the liquid-processing plant 10 at B".

From the above description, it is shown that a processing plant 10 includes a large amount of equipment which must be controlled accurately in order to allow the plant owner or operator to produce different kinds of liquid products. When designing such processing plant it is therefore suggested to represent different equipment or processing plant characteristics by their functionality rather than by their physical structure.

A functional representation of the liquid processing plant 10' is illustrated in Fig. 1b. Here, different modules 40 represent the different functionalities of the liquid processing plant, such as inlet, storage, transport, separation, production, heating, and outlet. These functionalities correspond to at least some of the processing equipment shown in Fig. 1a, and may preferably be provided using a standard for batch control, such as the ANSI/ISA-88.

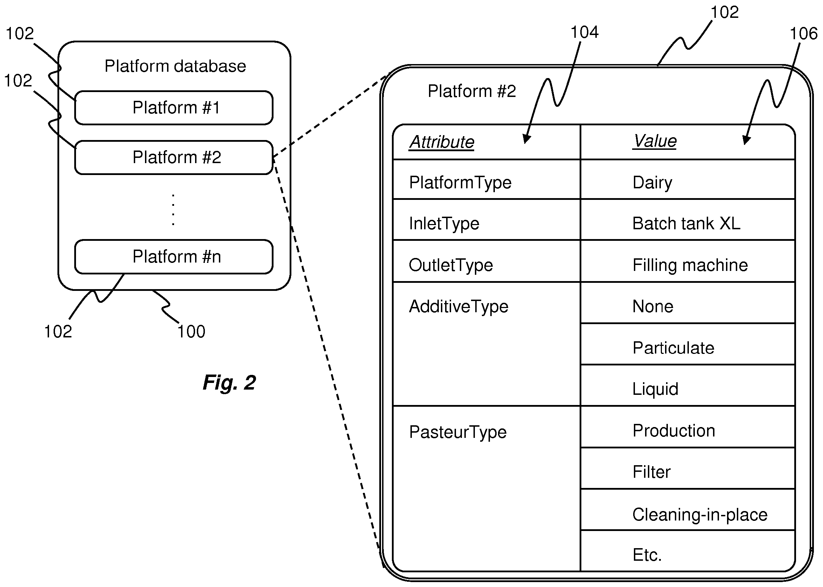

In order to facilitate the design process a platform database is created, of which an example is shown in Fig. 2. The platform database is created in order to categorize the processing plant by its general principle and functionality. Hence, each item in the database, corresponding to a representation of a specific platform type, includes definitions and limitations on the general functionality.

In Fig. 2, a platform database 100 according to the invention is shown. The database 100 stores a plurality of items 102, each item representing a particular platform type in the form of a processing platform representation. An example of such database item 102 is also shown in Fig. 2, wherein the item 102 is associated with a plurality of features or definitions. These are described as item attributes 104 with one or more associated values 106.

As can be seen in Fig. 2, the database item 102 defines the platform type by its attributes 104. Hence, the platform type may be defined by its intended use, i.e. the general platform type. Suitable values for such attribute may e.g. be dairy, ice cream, cosmetics, beverages, etc. It may also be possible to assign a value corresponding to a combination of the above mentioned values in case the processing plant should be designed to process different types of products.

A further attribute 104 of the database item 102 may represent the inlet type. Suitable values for this attribute may e.g. be batch tank, and a further specification relating to the desired size of the batch tank. In the shown example, the inlet type value is set to Batch tank XL, corresponding to a large volume batch tank for high speed processing.

The database item 102 may further include an attribute 104 corresponding to the desired outlet type. For example, if a filling machine is provided in series with the future processing plant a value for such attribute may be filling machine. Other possible values may e.g. be storage tank.

Another attribute 104 may be associated with the types of additives, whereby suitable values may be "none", "solid matter" (i.e. particulate substances such as powder) or "liquid". In the shown example, all three values have been assigned.

A yet further attribute 104 of the database item 102 may be related to the type of pasteurization, wherein suitable values may be production, filter, cleaning-in-place, etc. Similarly to what has been described above, the attribute may have several values assigned to it.

Although not explicitly shown in Fig. 2, the database item 102 may have additional attributes for defining the specific platform type. Such attributes may e.g. relate to batch control, logging, processing plant performance, processing plant flexibility, cost-of-ownership, etc.

As a first step in the design process, a suitable platform type is selected as a processing platform representation. This may be done in many different ways, but according to the invention, it is performed by inputting specific requirements being associated with the attributes 104 of the database items 102. In an embodiment, the design process may e.g. start by receiving a processing plant specification in which some general definitions are specified as processing characteristics. A design tool may be configured to ask several questions whereby the processing plant designer answers the questions by consulting the processing plant specification. Hence, each question may be constructed such that a valid answer will eliminate at least one possible database item 102.

By applying an intelligent selection algorithm the most suitable processing plant platform may be indentified and selected in a fast and reliable manner.

Once the platform type has been selected the designer is allowed to add desired functionality to the platform. Available functionality is represented by corresponding design elements which are stored in a design element database 200, wherein at least one functionality is associated with each design element 202.

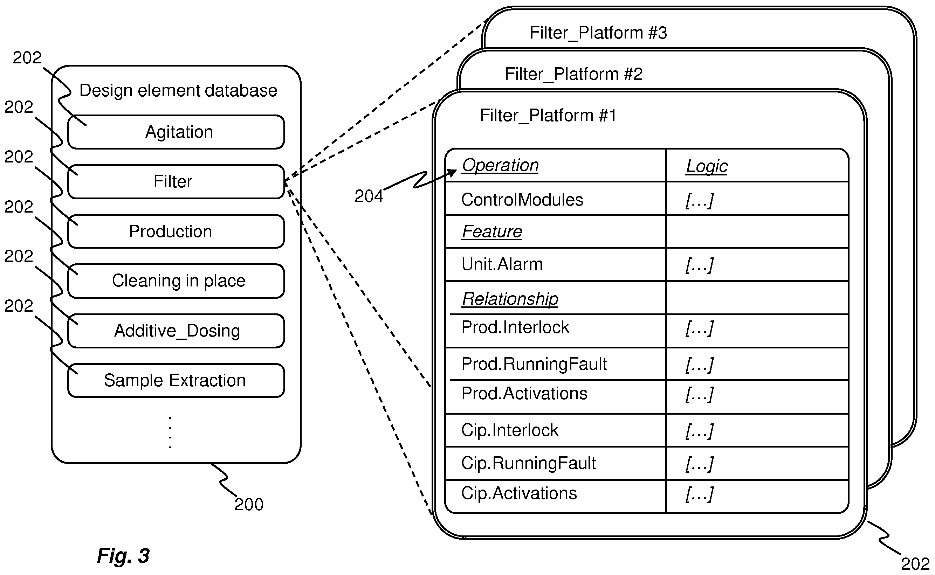

As can be seen in Fig. 3 the design element database 200 has several design elements 202 stored therein, wherein a specific functionality of the processing plant is associated with a design element 202. For example, possible design elements 202 may be agitation, filter, production, cleaning in place (CIP), additive dosing, sample extraction, etc. The functionality of physical components, such as processing equipment, as well as the functionality of abstract options of the processing plant, is thus represented by individual design elements 202. The functionality of an abstract option may e.g. be change of liquid product, i.e. a change between two production routes, logging, or hibernation of heaters. In some embodiments, one or more functionalities may be represented by a single design element 202.

Each design element 202 is associated with one or several attributes 204. The attributes 204 are preferably divided into a plurality of classes, wherein a first class relates to the overall operation of the design element and includes a list of structural elements which needs to be controlled. A further class relates to specific features of the design element, while a third class relates to a link between the design element 202 and its surrounding, i.e. the relationship between the design element 202 and other design elements and/or the selected platform type.

As can be seen in Fig. 3 the design element database 200 may include several versions of the same design element 202. According to the invention, each version of the same design element 202 is associated with a specific platform type, whereby it is suggested that the design elements 202 are defined with respect to the respective predefined platform types.

In an embodiment, all versions of the same design element 202 will provide the same functionality, however each version may have its unique configuration with respect to e.g. performance, cost, etc. which is specified by the platform type.

The design element 202 denoted as filter will now be described. The filter is configured to be controllable and is associated with an alarm feature. Hence the design element 202 comprises a first attribute relating to specific control modules, which attribute 204 is associated with suitable logic for generating the required control system. Further, the design element 202 comprises a second attribute relating to the alarm feature, which attribute 204 is associated with suitable logic for the particular alarm feature.

Moreover, the specific alarm feature will affect other design elements, such as the production design element and the CIP design element. Therefore, the design element 202 of the filter comprises a set of relationships to these other design elements, wherein the relationships are represented as Prod.Interlock, Prod.RunningFault, Prod.Activations, Cip.Interlock, Cip.RunningFault, and Cip.Activations, each relationship being associated with corresponding logic.

In most cases production and CIP are not performed simultaneously for a specific sub-unit of the processing plant, but normally CIP is started only when the production has stopped or the liquid product being processed is bypassed the particular sub-unit. During production the particular design element, i.e. the filter, has three relationships with the production design element, wherein the alarm feature of the filter design element may affect a production interlock, a production running fault, as well as a production activation. The interlock, the running fault, and the activation are preferably defined by the platform type, whereby specific logic associated with the platform type may control how features of a specific design element interact with other design elements.

During CIP the filter design element has three relationships with the active CIP design element, wherein the alarm feature of the filter design element may affect a CIP interlock, a CIP running fault, as well as a CIP activation. The interlock, the running fault, and the activation are preferably defined by the platform type, whereby specific logic associated with the platform type may control how features of a specific design element interact with other design elements.

The relationships may be bi-directional, such that the production design element has a relationship with the filter design element. As an example, a production interlock execution may cause a reset of the alarm feature of the filter design element.

Now returning to the different versions of the same design element, another platform type may not support the CIP functionality whereby a specific filter design element may omit these relationships.

The method described so far uses a multi-layer modular approach for designing a liquid processing plant, whereby the platform type defines a first layer and the plurality of design elements defines a second layer.

In an embodiment, an intermediate layer is provided between the platform layer and the design element layer. This intermediate layer is preferably a sub-unit layer, and is preferably provided for processing platform types being suitable to be divided into several serial or parallel sub-units. For example, a platform type may be defined by an inlet unit, a processing unit, and an outlet unit. Further, the processing unit may be defined by a heat treatment unit, a holding unit, etc. As an example, the inlet unit may structurally comprise inlet valves, a batch tank, an agitator, a filter, a pump, liquid piping, and a temperature regulator. Using such intermediate layer approach, the functionality of the design elements may relate to the platform type, the sub-unit type, and/or the design elements.

By adding several design elements to the selected platform type it is possible to define the processing plant in a modular way. Each design element is associated with a specific functionality and is pre-constructed to include the relationships to other design elements as well as to the selected platform type.

According to the invention, the processing platform representation (10') is converted to computer logic for controlling processing plant hardware, whereby each design element item (202) further comprises at least one attribute defining control logic for the design element.

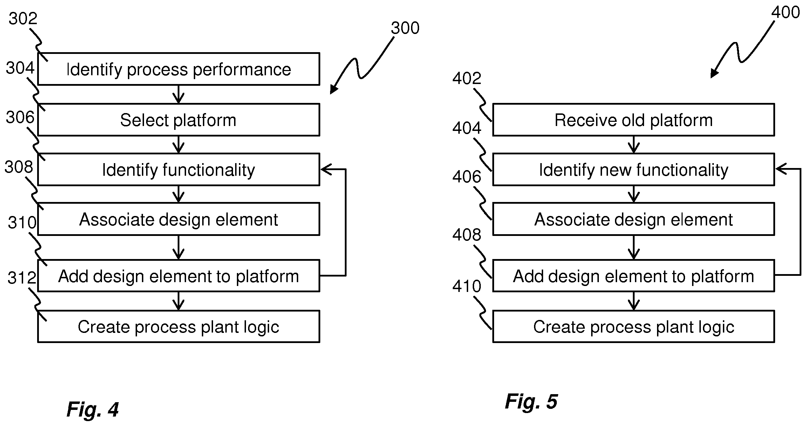

With reference to Fig. 4, a method 300 according to an embodiment will be described. The method 300 includes a first step 302 of identifying the desired processing plant performance, e.g. by retrieving a processing plant specification. In a subsequent step 304 a suitable platform type is selected from a platform database, resulting in a processing platform representation. Step 304 may be performed by stepping through a selection algorithm, whereby valid input results in the most suitable processing platform representation.

In step 306 the necessary functionality of the processing plant is identified and corresponding design elements associated with the given functionality are chosen in step 308. In a subsequent step 310 the chosen design elements are added to the processing platform representation. Steps 306, 308, and 310 are repeated until the identified functionality is completely fulfilled by the processing platform representation and the associated design elements.

In a last step 312 the processing platform representation, including the associated design elements, is used to generate logic and control schemes for the entire processing plant. This may be done in different ways; however it is preferred to use a design tool for transforming functional process definitions into automation control algorithms.

In Fig. 5 a method 400 according to a further embodiment is shown schematically. The method 400 is provided for already existing processing plant designs, and is performed in order to update existing processing plants with new functionality.

Starting with step 402, an existing design for a liquid processing platform is received. The existing platform design is associated with one or more design elements and a processing platform representation thus defining the functionality of the platform. In step 404 a new functionality is identified, either by its function per se or by its structure. For example, it is decided to add CIP to the platform, or to replace an existing filter with a new and improved alternative. When a new functionality has been identified step 406 is performed whereby the identified functionality is associated with a corresponding design element from a design element database. The design element is thereafter inserted into the processing platform representation in step 408, either by addition or by replacing a former design element. In a last step 410 the platform type, including the associated design elements, is used to generate logic and control schemes for the entire processing plant in accordance with what has been described with reference to Fig. 4.

Hence, by defining design elements corresponding to structural equipment or functional, i.e. abstract, options, and by associating relationships with other design elements and/or platforms and/or sub-units, it is possible to design a liquid-processing platform in a modular way. Further, the proposed methods improve the previously known techniques for redesigning liquid-processing platforms. This is due to the fact that adding new functionality may often affect already existing functionality. Since existing functionality, i.e. design elements, are defined by its relationship to other functionalities, i.e. other design elements and/or platforms and/or sub-units, the amount of work required to ensure the correct operation of the processing platform is greatly reduced.

A similar method may be performed when a specific functionality is decided to be removed from an existing platform design.

Although the above description has been made mostly with reference to a generic processing plant, it has been proven that the described embodiments are particularly advantageous for a liquid processing plant, and especially for liquid food processing plants.

Further, the invention has mainly been described with reference to a few embodiments. However, as is readily understood by a person skilled in the art, other embodiments than the ones disclosed above are equally possible within the scope of the invention, as defined by the appended claims.

## Claims

1. A computer implemented method for designing a processing plant (10) that is configured to process liquid food according to different processing schemes, comprising the steps of:
identifying (302) at least one required processing characteristics of the processing plant (10) based on predetermined design input; and
selecting (304) from a platform database (100) a processing plant representation (10') wherein the platform database (100) comprises a plurality of items (102), each item (102) representing a particular platform type in the form of a processing platform representation,
wherein each item (102) is associated with a plurality of item attributes (104), each item attribute (102) being associated with one or more values (106), and
wherein the selection is based on said identified at least one processing characteristics and said attributes (104);
identifying (306) at least one required functionality of the processing plant (10);
associating (308) said at least one functionality with at least one design element item (202) from a design element database (200), wherein each design element item (202) comprises one or more attributes (204) defining
- relationships between the particular design element item (202) and other design element items, and
- the liquid food to be processed by the processing plant (10), comprises at least one attribute (204) defining control logic for the design element item (202), and
comprises one or more attributes defining the a relationship between the particular design element (202) and the processing plant representation (10'); adding (310) said at least one design element item (202) to the processing plant representation (10'); and converting said processing plant representation (10') to computer logic for controlling hardware of the processing plant.

2. The method according to claim 1, wherein said processing plant representation (10') forms part of a group of different processing plant representations, and wherein each one of said processing plant representations is associated with a specific processing characteristics.

3. The method according to any one of claims 1 or 2, wherein each design element item (202) further comprises at least one attribute (204) defining a feature of the design element item (202).

## Patentansprüche

1. Computerimplementiertes Verfahren zum Entwerfen einer Verarbeitungsanlage (10), die ausgelegt ist zum Verarbeiten von flüssigem Lebensmittel gemäß verschiedener Verarbeitungsschemata, umfassend die Schritte:
Identifizieren (302) mindestens einer erforderlichen Verarbeitungscharakteristik der Verarbeitungsanlage (10) auf Basis einer vorbestimmten Entwurfseingabe; und
Wählen (304) von einer Plattformdatenbank (100) einer Verarbeitungsanlagendarstellung (10'), wobei die Plattformdatenbank (100) mehrere Posten (102) umfasst, wobei jeder Posten (102) einen bestimmten Plattformtyp in der Form einer Verarbeitungsplattformdarstellung darstellt,
wobei jeder Posten (102) mit mehreren Elementattributen (104) assoziiert ist, wobei jedes Elementattribut (102) mit einem oder mehreren Werten (106) assoziiert ist, und
wobei die Wahl auf der identifizierten mindestens einen Verarbeitungscharakteristik und den Attributen (104) basiert;
Identifizieren (306) mindestens einer erforderlichen Funktionalität der Verarbeitungsanlage (10) ;
Assoziieren (308) der mindestens einen Funktionalität mit mindestens einem Entwurfselementposten (202) aus einer Entwurfselementdatenbank (200), wobei jeder Designelementposten (202) ein oder mehrere Attribute (204) umfasst, die
- Beziehungen zwischen dem jeweiligen Entwurfselementposten (202) und anderen Entwurfselementposten und
- das durch die Verarbeitungsanlage (10) zu verarbeitende flüssige Lebensmittel definieren,
mindestens ein Attribut (204) umfasst, das eine Steuerlogik für den Entwurfselementposten (202) definiert, und
ein oder mehrere Attribute umfasst, die die Beziehung zwischen dem jeweiligen Entwurfselement (202) und der Verarbeitungsanlagendarstellung (10') definieren;
Hinzufügen (310) des mindestens einen Entwurfselementpostens (202) zu der Verarbeitungsanlagendarstellung (10'); und
Umwandeln der Verarbeitungsanlagendarstellung (10') in eine Computerlogik zum Steuern von Hardware der Verarbeitungsanlage.

2. Verfahren nach Anspruch 1, wobei die Verarbeitungsanlagendarstellung (10') einen Teil einer Gruppe von verschiedenen Verarbeitungsanlagendarstellungen bildet, und wobei jede einzelne der Verarbeitungsanlagendarstellungen mit einer spezifischen Verarbeitungscharakteristik assoziiert ist.

3. Verfahren nach einem der Ansprüche 1 oder 2,
wobei jeder Entwurfselementposten (202) weiter mindestens ein Attribut (204) umfasst, das ein Merkmal des Entwurfselementpostens (202) definiert.

## Revendications

1. Procédé implémenté par ordinateur pour concevoir une usine de transformation (10) qui est configurée pour transformer un produit alimentaire liquide selon différents modes de transformation, comprenant les étapes de :
l'identification (302) d'au moins une caractéristique de transformation requise de l'usine de transformation (10) sur la base d'une entrée de conception prédéterminée ; et
la sélection (304), à partir d'une base de données de plate-forme (100), d'une représentation d'usine de transformation (10'), dans lequel la base de données de plate-forme (100) comprend une pluralité d'articles (102), chaque article (102) représentant un type de plate-forme particulier sous la forme d'une représentation de plate-forme de transformation,
dans lequel chaque article (102) est associé à une pluralité d'attributs d'article (104), chaque attribut d'article (102) étant associé à une ou plusieurs valeurs (106), et
dans lequel la sélection est sur la base de ladite au moins une caractéristique de transformation identifiée et desdits attributs (104) ;
l'identification (306) d'au moins une fonctionnalité requise de l'usine de transformation (10) ;
l'association (308) de ladite au moins une fonctionnalité à au moins un article d'élément de conception (202) d'une base de données d'élément de conception (200), dans lequel chaque article d'élément de conception (202) comprend un ou plusieurs attributs (204) définissant
- des relations entre l'article d'élément de conception particulier (202) et d'autres articles d'élément de conception, et
- le produit alimentaire liquide destiné à être transformé par l'usine de transformation (10) comprend au moins un attribut (204) définissant une logique de commande pour l'article d'élément de conception (202), et
comprend un ou plusieurs attributs définissant l'une relation entre l'élément de conception particulier (202) et la représentation d'usine de transformation (10) ;
l'ajout (310) dudit au moins un article d'élément de conception (202) à la représentation d'usine de transformation (10') ; et
la conversion de ladite représentation d'usine de transformation (10') en logique d'ordinateur pour commander du matériel de l'usine de transformation.

2. Procédé selon la revendication 1, dans lequel ladite représentation d'usine de transformation (10') fait partie d'un groupe de différentes représentations d'usine de transformation, et dans lequel chacune desdites représentations d'usine de transformation est associée à une caractéristique de transformation spécifique.

3. Procédé selon l'une quelconque des revendications 1 ou 2, dans lequel chaque article d'élément de conception (202) comprend en outre au moins un attribut (204) définissant une particularité de l'article d'élément de conception (202).
